(19) Europäisches Patentamt / European Patent Office / Office européen des brevets

(11) **EP 3 193 163 A1**

(12) **EUROPEAN PATENT APPLICATION**

(43) Date of publication:
**19.07.2017 Bulletin 2017/29**

(51) Int Cl.:
***G01N 29/14*** *(2006.01)*

(21) Application number: **16151091.2**

(22) Date of filing: **13.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Technology AG**
**8050 Zürich (CH)**

(72) Inventors:
• **MENGOTTI, Elena**
  **8053 Zürich (CH)**

• **RIEDEL, Gernot**
  **5406 Baden-Rütihof (CH)**
• **KARKKAINEN, Tommi**
  **53850 Lappeenranta (FI)**
• **TALVITIE, Joonas**
  **53850 Lappeenranta (FI)**
• **KUISMA, Mikko**
  **54120 Pulp (FI)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **FATIGUE DETECTION FOR POWER ELECTRONICS MODULES BASED ON ACOUSTIC EMISSIONS**

(57) A method for analysing a power electronics module (10) based on acoustic emissions comprises: generating a current pulse (38) through the power electronics module (10); receiving an acoustic signal ($v(t)$) from an acoustic sensor (28) adapted for acquiring acoustic emissions from the power electronics module (10); determining at least one characteristic value (50, 52) from the acoustic signal ($v(t)$), wherein the characteristic value (50, 52) is based on the acoustic signal acquired at different time points during and/or after the current pulse (38); and determining, whether the power electronics module (10) is fatigued, by comparing the at least one characteristic value (50, 52) with a threshold value (54, 56).

**Fig. 4**

EP 3 193 163 A1

**Description**

FIELD OF THE INVENTION

The invention relates to a method and analysis device for analysing a power electronics module based on acoustic emissions, a power electronics device and a use of acoustic emissions for discriminating, whether a power electronics module is fatigued.

BACKGROUND OF THE INVENTION

When a power electronics device, such as a part of a power converter, fails, the factory, power plant or other facility utilizing it may stop operating wholly or partially.

With predicative maintenance it is tried to predict, whether specific electronic devices will fail in the future, before they really fail. Predictive maintenance may allow for controlled shut-down of the plant and may reduce downtimes. Furthermore, with predicted maintenance, unexpected failures causing damages may be avoided.

Several methods of predictive maintenance are known. But these methods usually involve very fast and complex measurements of electrical quantities to be implemented for each semiconductor component of the power electronics device. This usually renders such solutions complex and expensive.

Statistics based methods that try to track the stress experienced by the semiconductor components have also been proposed, but these methods do not monitor the present state of the semiconductor components but only the environmental conditions and load conditions.

JPS55117255 A relates to detection of a fault of a semiconductor device by detecting the acoustic emission at the semiconductor device. The emission is converted by a pressure-sensitive element to an electric signal. A signal discriminator then detects an abnormal state based on the amplified electric signal.

KR20080071814 A relates to a device for sensing an operating error of an apparatus using sound.

DESCRIPTION OF THE INVENTION

An objective of the invention is to provide reliable predicative maintenance for power electronics devices based on simple measurements and/or simple evaluations of the measurements.

This objective is achieved by the subject-matter of the independent claims. Further exemplary embodiments are evident from the dependent claims and the following description.

A first aspect of the invention relates to a method for analysing a power electronics module based on acoustic emissions.

A power electronics module may comprise one or more power semiconductor chips and at least a substrate on which the one or more power semiconductor chips are attached (for example soldered). The one or more chips may be interconnected with a metallization layer on the chip with one or more bond wires. Furthermore, a power electronics module may comprise a housing surrounding the one or more power semiconductor chips.

A power semiconductor chip may comprise a switch (such as a transistor, thyristor) and/or a diode. The power semiconductor module may comprise different types of chips and/or power semiconductors, such as a switch in combination with a diode.

It has to be understood that the term "power" may relate to currents of more than 10 A. Furthermore, the term "power" may relate to voltages of more than 600 V, for example more than 1000 V. In particular, a power electronics module may comprise power electronic chips adapted for processing current of more than 10 A and/or more than 600 V.

It has been turned out, that when a varying current is flowing through the power electronics module, the power electronics module generates acoustic emissions, which for example may be based on changing magnetic fields acting forces on metallic components of the power electronics module and/or thermal changes of components of the power electronics module.

These acoustic emissions may be recorded and analysed, such that they contain information on the current state of the power electronics module.

According to an embodiment of the invention, the method comprises: generating a current pulse through the power electronics module; receiving an acoustic signal from an acoustic sensor adapted for acquiring acoustic emissions from the power electronics module; determining at least one characteristic value from the acoustic signal, wherein the characteristic value is based on the acoustic signal acquired at different time points during and/or after the current pulse; and determining, whether the power electronics module is fatigued, by comparing the at least one characteristic value with a threshold value.

In a first step of the method, acoustic emissions are generated with a current pulse through the power electronics module. The current pulse may have a substantially rectangular shape but also may have another form. In general, the current pulse may have at least one steep edge. Such a current pulse may generate magnetic fields and/or thermal changes inside the module, which are high enough to generate measurable acoustic emissions. For example, the current pulse may have a length of about 1 ms.

In a second step of the method, the acoustic emissions may be measured and converted into an acoustic signal. The acoustic emissions may be emissions in a frequency range between 10 Hz and 30 kHz. Acoustic emissions may be seen as mechanical vibrations and/or pressure fluctuations, which may be measured with a respective sensor, such as a microphone, vibration sensor, etc.

A corresponding acoustic sensor will convert the acoustic emissions into a raw signal, usually a voltage signal (which may be seen as an analog acoustic signal), which then may be converted into a digitized acoustic signal. The acoustic signal may be a digital signal comprising a plurality of sample values acquired at consecutive time points with a specific sampling rate. For example, the sample rate may be in the range of 5 kHz to 100 kHz.

Usually, the recording of the acoustic signal may start at the start of the current pulse and/or may end at a specific time point after the start of the current pulse, such as 10 ms after the start of the current pulse.

In a third step of the method, the acoustic signal may be evaluated and a characteristic value may be determined from the acoustic signal. For example, the acoustic signal may be transformed into other signals (for example in a digital way by applying mathematical transformations onto the acoustic signal). The characteristic value then may be calculated from the acoustic signal or a signal derived thereof from two or more sample values at different time points.

It has to be noted that the characteristic value does not only depend on the acoustic signal at a specific time point but may depend on the shape of the signal and/or values of the signal at different time points. In particular, the characteristic value may depend on a time interval of the acoustic signal. It has been shown, that in particular the time dependence of the acoustic signal during and/or after the current pulse contains information about the state of wear of the power electronics module.

For deciding, whether the power electronics module is fatigued, i.e. is in a wear state that indicates that it will presumable fail during a specific future time period, the characteristic value is compared with a threshold value.

The threshold value for a specific characteristic value may be determined by experiment. Characteristic values for a number of power electronics devices of the same type may be collected over time and the time behaviour of the characteristic values may be compared with the failure of the power electronics module. For example, the threshold value may be set to a value, where it indicates that a power electronics module has a probability of failing with at least 50 % during the next month.

According to an embodiment of the invention, the characteristic value is based on a cumulative signal, which is based on cumulating the acoustic signal or a signal derived thereof over time. A cumulative signal may be a signal that is based on integrating the acoustic signal or a signal derived thereof over time. For example, for a digital (acoustic or derived) signal, the cumulative signal at time step n may be the sum of the sample values of the digital signal between time step 0 and time step n.

The characteristic value then may be the cumulative signal at a specific time point. For example, the characteristic value may be the sum of sample values of the acoustic signal (or a signal derived thereof) between two time points after the start of the current pulse.

According to an embodiment of the invention, the characteristic value is based on a rise over time of a cumulative signal based on the acoustic signal. The characteristic value may be based on a difference of values of the cumulative signal between two time points after the start of the current pulse. Also, the characteristic value may be based on a time at which the cumulative signal reaches a specific value.

In general, the decision, whether a power electronics module is fatigued or not may be based on two or more characteristic values. For example, when one of the two or more characteristic values is outside of its respective threshold value, it may be decided that the power electronics module is fatigued. For example, the power electronics module may be determined to be fatigued, when at least one of the rise of the cumulative signal (or a signal derived thereof) and the cumulation of the acoustic signal (or a signal derived thereof) is outside its respective threshold value.

According to an embodiment of the invention, the method further comprises: determining an envelope signal from the acoustic signal, wherein the characteristic value is determined from the envelope signal. For example, as a pre-processing, an envelope signal of the acoustic signal may be determined. The envelope signal may be seen as a signal derived from the acoustic signal, which may be used for calculating characteristic values.

The envelope signal may be calculated from the acoustic signal by convolution with a smoothing kernel function, by cutting off higher order frequency parts or by simply averaging over local minima or maxima.

As a further example, the envelope signal may be based on applying a Hilbert transform and/or a low-pass filter function to the acoustic signal.

According to an embodiment of the invention, the method further comprises: determining a cumulative energy signal from the acoustic signal; wherein the characteristic value is determined from the cumulative energy signal. For example, the cumulative energy signal is based on squaring the envelope signal of the acoustic signal and integrating (summing) the squared enveloping signal over time.

According to an embodiment of the invention, the characteristic value is a cumulative energy value taken from the cumulative energy signal at a predefined time after the current pulse. For example, the characteristic value may be the value of the cumulative energy signal between 2 to 20 ms after the start of the current pulse.

According to an embodiment of the invention, the characteristic value is a time at which the cumulative energy signal has reached a predefined energy value after the current pulse. For example, the rise time may be shortest time at which the cumulative energy signal is equal to the predefined energy value.

It has to be understood that both the cumulative energy value and the rise of cumulative energy value may be used together for determining the fatigued of a power electronics module.

According to an embodiment of the invention, the current pulse through the power electronics module is generated, i.e. triggered, by applying a gate pulse to a power semiconductor switch of the power electronics module.

For example, the power electronics module may be connected with a current and/or voltage source (such as a capacitor and/or a DC link), which supplies the power electronics module with power. The current pulse is then generated by switching the power semiconductor switch into a conducting state with the gate pulse. However, it also may be possible that the current pulse is generated by switching another switch connected in series with the power semiconductor module.

According to an embodiment of the invention, the current pulse through the power electronics module is generated by a controller of the power electronics module during normal operation of the power electronics module. It may be possible that normal pulses (i.e. pulses that are generated during normal operation of the device, such as PWM-pulses for a converter) are used for determining the fatigue of the power electronics module.

During normal operation, whenever the controller generates a current pulse (or gate pulse) that may be used for fatigue determination, the controller may inform a submodule or further analysis device that such a pulse will be generated at a specific time point. The submodule or the analysis device then may perform the method for determining the fatigue state of the power electronics module.

According to an embodiment of the invention, a current pulse through the power electronics module is generated by a controller of the power electronics module during a start-up phase, shut-down phase and/or maintenance phase of the power electronics module. It also may be possible that predicative maintenance is performed automatically by the controller at specific phases, in which the power electronics module is not in normal operation mode.

According to an embodiment of the invention, the acoustic sensor is placed inside or outside a housing of the power electronics module or is attached to the housing. For example, the acoustic sensor may be directly attached to the power electronics module, or further away. The acoustic sensor may be assembled together with the power electronics device, may be a permanent component of the power electronics module or only may be arranged at the power electronics module by a service technician during maintenance.

It may be possible that more than one acoustic sensor is used for measuring acoustic emissions of one power electronics module.

It also may be possible that one acoustic sensor is used for measuring acoustic signals of more than one power electronics module.

A further aspect of the invention relates to an analysis device for analysing a power electronics module based on acoustic emissions, wherein the analysis device comprises an acoustic sensor adapted for sensing acoustic emissions from the power electronics module and for converting the acoustic emissions into an acoustic signal and an evaluation device adapted for performing the method as described in the above and in the following.

For example, the analysis device may be a laptop of a service technician interconnected with the controller of a power electronics device comprising the power electronics module and interconnected with an acoustic sensor placed inside, outside or near the power electronics module. The service technician may run test cases on the laptop, which cause the controller to generate current pulses and in which the fatigue state of the power electronics module is determined.

Furthermore, the analysis device may be part of a test facility for power electronics modules used for testing power electronics module after manufacturing.

As a further example, the analysis device may be part of a power electronics device, in which the power electronics module is assembled.

The information produced by the evaluation device may be transmitted to a further electronic device, such as a converter monitoring system and/or a plant monitoring system.

A further aspect of the invention relates to a power electronics device, which comprises at least one power electronics module and such an analysis device.

For example, the power electronics device may be a power converter, which comprises a plurality of power electronics modules. For example, the power electronics modules may comprise half bridges, which are controlled by a controller of the converter. The controller may provide the analysis device (for example by running a corresponding software module), which may generate current pulses by switching semiconductor switches of the half-bridges and by acquiring acoustic signals from an acoustic sensor inside the converter.

The converter may be a converter in application fields such as industry in general, production of electrical energy, transmission of electrical energy, and transportation.

A further aspect of the invention relates to a use of acoustic emissions for discriminating, whether a power electronics module is fatigued, the acoustic emissions being generated during and/or after a current pulse through the power electronics module and being evaluated at different time points.

It has to be noted that by using acoustic emissions, a non-destructive analysis method for power electronics modules and/or power electronics devices may be provided, which may be used during operation and/or during maintenance. The use of acoustic emissions for detecting the fatigue state and/or age of a power electronics module may be applied to many application fields of power electronics, including industrial processes, HVAC, renewable power systems, smart grids and transportation.

It has to be understood that features of the method as described in the above and in the following may be features of the analysis device, the power electronics device and/or the use as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows a power electronics module with an analysis device according to an embodiment of the invention.

Fig. 2 schematically shows a power electronics device according to an embodiment of the invention.

Fig. 3 shows a flow diagram for a method for analysing a power electronics module based on acoustic emissions according to an embodiment of the invention.

Fig. 4 shows a diagram with cumulative energy signals produced during the method of Fig. 3.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

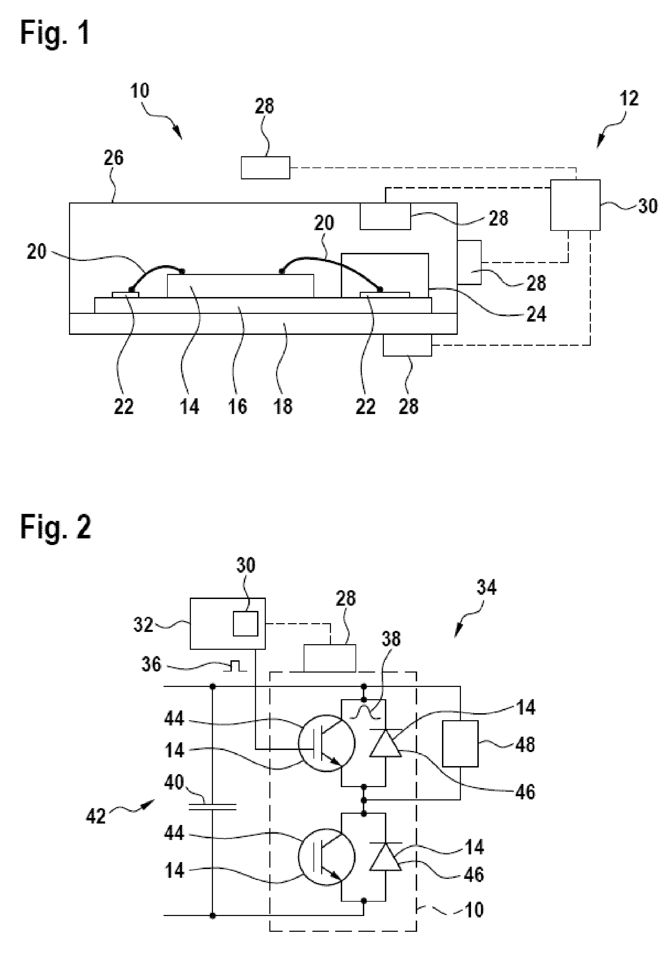

Fig. 1 shows a power electronics module 10 with an analysis device 12 that is used for detecting and analysing acoustic emission from the power electronics module 10.

The power electronics module 10 comprises one or more semiconductor chips 14 that are soldered to a substrate 16, which is soldered to a base plate 18, which may be used for cooling the power electronics module 10. The one or more semiconductor chips 14 may be additionally connected via bond wires 20 to metallization layers 22 on the substrate 16. It may be possible that the one or more semiconductor chips 14 and/or the bond wires 20 are embedded in plastics 24, for example due to isolation and/or mechanical reasons. The one or more semiconductor chips 14, substrate 16, bond wires 20 and the plastics 24 may be covered by a housing 26.

The one or more semiconductor chips 14 may comprise transistors, thyristors and/or diodes.

When the power electronics module 10 is subjected to a current pulse, i.e. a current flowing through at least one of the semiconductor chips 14, which has at least one steep edge, varying magnetic fields are generated inside the housing 26, which cause vibrations in components of the power electronics module 10. For example, the chips 14, the substrate 16 (and/or its metallization layers 22), the base plate 18, the bond wires 20, the housing 26 may start to vibrate and may emanate acoustic emissions.

Such acoustic emissions contain characteristics of the state of the power electronics module 10. For example, bond wire failures, in which a bond wire 20 at least partially detaches from the chip 14 or from the metallization layer 22 may change the resonance frequency of the respective bond wire. Also solder fatigues, in which the chip 14 at least partially detaches from the substrate 16 or the substrate 16 from the base plate 18, may cause such changes in resonance frequencies of specific parts of the power electronics module 10.

The analysis device 12 comprises one or more acoustic sensors 28 and an evaluation device 30 for processing acoustic signals from the acoustic sensor 28 to determine characteristics from the acoustic signals.

The sensor 28 may be placed outside of the housing 26 of the power electronics module 10. In such a way, acoustic emissions of more than one power electronics module 10 may be measured by one sensor.

The sensor 28 may be placed onto the housing 26 and/or may be arranged inside or outside of the housing 26. It also may be possible that the sensor 28 is attached to the base plate 18 and/or to a cooling surface of the power electronics module 10.

The sensor 28 is adapted for measuring acoustic emissions from the power electronics module 10 and for producing acoustic signals therefrom. The acoustic sensor 28 may be a microphone, a vibration sensor, an acoustic wave sensor, etc. For example, the sensor 28 may generate an analog acoustic signal, which is then converted into a digital acoustic signal by the evaluation device 30.

The evaluation device 30 may be a laptop or comparable device, which may be carried by a service technician for examining the power electronics module 10. In this case, the acoustic sensor 28 may have been placed at the power electronics module 10 by the service technician and may be removed after maintenance. However, the sensor 28 also may be permanently installed at the power electronics module 10.

The evaluation device 30 also may be or may comprise an analog circuit, which may be adapted for analogly integrating the acoustic signal and/or for comparing the integrated signal with a predefined value.

Furthermore, the evaluation device 30 and the sensor 28 may be part of a test facility, in which the power electronics module 10 is tested after manufacturing.

As shown in Fig. 2, the evaluating device 30 also may be part of a controller 32 of a power electronics device 34, which comprises the power electronics module 10. For example, the evaluating device may be provided as a software module inside the controller 32.

For example, as shown in Fig. 2, the power electronics device 34 may be a part of an electrical converter and the power electronics module 10 may be a half-bridge module of the converter, which comprises two series-connected semiconductor switches 44 and two anti-parallel diodes 46 on several semiconductor chips 14.

For generating the current pulse, the controller 32 and in particular the evaluation device 30 may generate a gate pulse 36 for one of the semiconductor switches, which then is switched into a conducting state for the time of the gate pulse 36. This results in a current pulse 38 through the power electronics module 10, which may be fed from a capacitor 40 of a DC link 42.

For example, the upper switch 44 may be continuously turned off (by keeping the gate signal low), and the lower transistor 44 is turned on for a period of time with the gate pulse 36. During the time in which the gate signal is high, an increasing current starts to flow from the DC link 42 through the power electronics module 10 to a load 48 interconnected with the power electronics device 34. When the lower transistor 44 is turned off, the current continues to flow through the freewheeling diodes 46. The acoustic emission may take place as the result of the turn-off of the lower transistor 44.

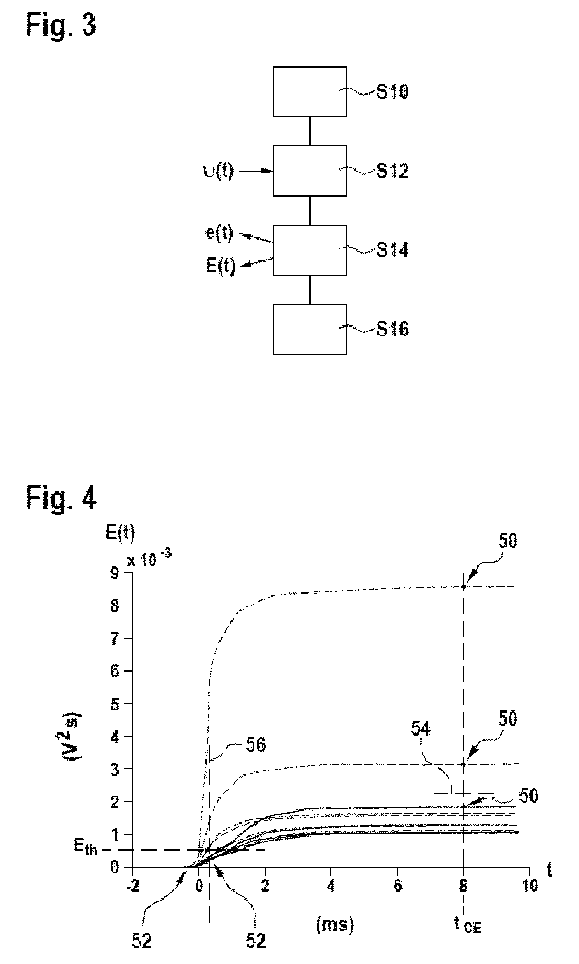

Fig. 3 shows a flow diagram for a method that may be performed by the controller 32 and/or the analysis device 30, in which a power electronics module 10 based on acoustic emissions is analysed. The method is non-destructive and may provide an early warning of semiconductor failure of a specific power electronics module 10.

In general, the method may be performed in different applications. The method may be performed by a controller 32 of a power electronics device 32 for self-diagnostics. The method may be performed by a test facility for testing power electronics modules, which have been manufactured. Furthermore, the method may be performed during maintenance, for example with an analysis device 12 that is installed by a service technician for the time of maintenance.

With respect to Fig. 3, in step S10, a current pulse 38 through the power electronics module 10 is generated. The current pulse 38, which may be seen as a test pulse for the specific power electronics module 10, may have a maximal current high enough (such as higher than 10 A) to produce enough acoustic emissions to be measured.

For example, the current pulse 38 through the power electronics module 10 may be generated by applying a gate pulse 36 to a power semiconductor switch 44 of the power electronics module 10.

However, it is also possible that the current pulse 38 is generated with the aid of a further semiconductor switch outside of the power electronics module 10.

The current pulse 38 may be generated by the controller 32 during normal operation of the power electronics device 10. For example, when the power electronics device is a converter, specific modulation pulses during the normal operation of the converter may be used as current pulses for analysing the power electronics module 10 that is switched by the corresponding modulation pulse.

It also is possible that the current pulse 38 is generated by the controller 32 during a start-up phase, shut-down phase and/or maintenance phase of the power electronics module 10. For example, a testing of one or more power electronics modules 10 of a converter may be performed during times, when the converter is not in use, i.e. when the load 48 is not driven.

In any way, the current pulse 38 generates acoustic emissions that are measured and evaluated in the following steps of the method.

In step S12, the evaluation unit 30 receives an acoustic signal $v(t)$ from one or more of the acoustic sensors 28, which are adapted for acquiring acoustic emissions from the power electronics module 10.

The recording of the acoustic signal $v(t)$ may be started shortly before or when the current pulse 38 is generated, for example, at the start or at the end of the current pulse 38. For example, the recording may be started, when the evaluation device 30 is informed by the controller 32 that a suitable current pulse 38 will be generated or when the evaluation device 30 requests from the controller 32 to generate a current pulse 38. The recording could be "on" all the time, and just the evaluation could be triggered to a specific moment, for example (shortly) before or when the current pulse 38 is generated, for example, at the start or at the end of the current pulse 38.

In general, the acoustic signal $v(t)$ may be a digitised signal and may comprise a sequence measurement/sample values, which have been recorded with a specific sample rate. The acoustic signal or the sample values may indicate and/or may relate to an acoustic pressure of the acoustic emissions.

In step S14, the evaluation device 30 determines at least one characteristic value from the acoustic signal $v(t)$, wherein the characteristic value is based on the acoustic signal $v(t)$ acquired at different time points t during and/or after the current pulse 38.

At first, for the acoustic signal $v(t)$, the envelope signal $e(t)$ is calculated. For example,

$$e(t) = \mathrm{lpf}(\sqrt{(v(t))^2 + (\mathrm{real}(\mathrm{H}(v(t))))^2})$$

where $\mathrm{H}(v(t))$ is the Hilbert transform of the acoustic signal and lpf() is a low-pass filter function. The low-pass filter function may have a cut-off frequency of 1 kHz. However, the envelope signal $e(t)$ may be obtained from the acoustic signal $v(t)$ by convolution, determining of local maximal values, etc.

After that, the cumulative energy signal

$$E(t) = \int_{-\infty}^{t} e(t)^2 dt$$

is calculated by integration over a square of the envelope signal.

It has to be understood that the time t may have discrete values and that the signals, $v(t)$, $e(t)$ and $E(t)$ are sequences of sample values at these discrete time points. In particular, the integral of the $E(t)$ may be a discrete integral performed by summing the sample values up to time point t.

Fig. 4 shows a diagram with curves of cumulative energy signals $E(t)$ for aged power electronics modules 10 (dashed curves) and for new power electronics modules 10 (continuous curves). It can be seen that the cumulative signal energy signal $E(t)$ rises earlier for aged modules 10 than it does in new ones. The total signal energy, i.e. the value of the cumulative signal energy signal $E(t)$ at the right end of the curves also tends to be higher in aged modules 10 than in new ones.

In such a way, two characteristic values 50, 52 may be defined:

A first characteristic value 50 may be a cumulative energy value 50, which may be a value of the cumulative energy signals $E(t)$ at a specific time $t_{cE}$ (here 8 ms after the end of the current pulse 38).

The second characteristic value 52 may be a rise time 52, which may be the time point, when cumulative energy signals $E(t)$ reach a specific threshold energy $E_{th}$ (here 0,5 mV$^2$s). The rise time 52 may be determined by finding the lowest $t_r$ for which $E(t_r) \geq E_{th}$ is true.

In step S16, the evaluation device 30 determines, whether the power electronics module (10) is fatigued, by comparing the at least one characteristic value 50, 52 with a threshold value 54, 56.

When a cumulative energy value 50 is higher than a threshold energy value 54 (here 2 mV$^2$s), the evaluation device 30 may decide that the corresponding module 10 is fatigued and may have to be replaced.

Analogously, when a rise time 52 is lower than a threshold rise time 56, the evaluation device 30 also may decide that the corresponding module 10 is fatigued.

In summary, the method and the analysis device 12 may provide means for using acoustic emissions for discriminating, whether a power electronics module 10 is fatigued. Various aging mechanisms of semiconductors on a module 10 may be detected in a non-destructive way. The measurement as well as the analysis may be simple and performed in an economical way. Furthermore, infant mortality problems of many power electronics devices 34 may be solved at a component level.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 10 | power electronics module |
| 12 | analysis device |
| 14 | semiconductor chip |
| 16 | substrate |
| 18 | base plate |
| 20 | bond wire |
| 22 | metallization layer |
| 24 | plastics cover |
| 26 | housing |
| 28 | acoustic sensor |
| 30 | evaluation device |
| 32 | controller |
| 34 | power electronics device |
| 36 | gate pulse |
| 38 | current pulse |
| 40 | capacitor |
| 42 | DC link |
| 44 | switch |
| 46 | diode |
| 48 | load |
| $v(t)$ | acoustic signal |
| $e(t)$ | envelope signal |
| $E(t)$ | energy signal |
| 50 | characteristic value (cumulative energy value) |
| 52 | characteristic value (rise time) |
| 54 | threshold value (energy threshold) |
| 56 | threshold value (threshold rise time) |

**Claims**

1. A method for analysing a power electronics module (10) based on acoustic emissions, the method comprising:

> generating a current pulse (38) through the power electronics module (10);
> receiving an acoustic signal ($v(t)$) from an acoustic sensor (28) adapted for acquiring acoustic emissions from the power electronics module (10);
> determining at least one characteristic value (50, 52) from the acoustic signal ($v(t)$), wherein the characteristic value (50, 52) is based on the acoustic signal acquired at different time points during and/or after the current pulse (38);
> determining, whether the power electronics module (10) is fatigued, by comparing the at least one characteristic value (50, 52) with a threshold value (54, 56).

2. The method of claim 1,
   wherein the characteristic value (50, 52) is based on a cumulative signal ($E(t)$), which is based on cumulating the acoustic signal ($v(t)$) or a signal derived thereof over time.

3. The method of claim 1 or 2,
   wherein the characteristic value (52) is based on a rise over time of a cumulative signal ($E(t)$) based on the acoustic signal ($v(t)$).

4. The method of one of the preceding claims, further comprising:

   > determining an envelope signal ($e(t)$) from the acoustic signal ($v(t)$);
   > wherein the characteristic value (50, 52) is determined from the envelope signal ($e(t)$).

5. The method of claim 4,
   wherein the envelope signal ($e(t)$) is based on applying a Hilbert transform and/or a low-pass filter function to the acoustic signal ($v(t)$).

6. The method of one of the preceding claims, further comprising:

   > determining a cumulative energy signal ($E(t)$) from the acoustic signal ($v(t)$);
   > wherein the characteristic value is determined from the cumulative energy signal ($E(t)$).

7. The method of claim 6,
   wherein the cumulative energy signal ($E(t)$) is based on squaring an envelope signal ($e(t)$) of the acoustic signal ($v(t)$) and integrating the squared enveloping signal over time.

8. The method of claim 6 or 7,
   wherein the characteristic value is a cumulative energy value (50) taken from the cumulative energy signal ($E(t)$) at a predefined time ($t_{ce}$) after the current pulse (38); and/or
   wherein the characteristic value is a time (52) at which the cumulative energy signal ($E(t)$) has reached a predefined energy value (56) after the current pulse (38).

9. The method of one of the preceding claims,
   wherein the current pulse (38) through the power electronics module (10) is generated by applying a gate pulse (36) to a power semiconductor switch (44) of the power electronics module (10).

10. The method of one of the preceding claims,
    wherein the current pulse (38) through the power electronics module (10) is generated by a controller (32) of the power electronics module (10) during normal operation of the power electronics module.

11. The method of one of the preceding claims,
    wherein the current pulse (38) through the power electronics module (10) is generated by a controller (32) of the power electronics module (10) during a start-up phase, shut-down phase and/or maintenance phase of the power electronics module (10).

12. The method of one of the preceding claims,
    wherein the acoustic sensor (28) is placed inside or outside a housing (26) of the power electronics module (10) and/or is attached to the housing (26).

13. An analysis device (12) for analysing a power electronics module (10) based on acoustic emissions, the analysis device (12) comprising:

    > an acoustic sensor (28) adapted for sensing acoustic emissions from the power electronics module (10) and for converting the acoustic emissions into an acoustic signal;
    > an evaluation device (30) adapted for performing the method of one of claims 1 to 12.

14. A power electronics device (34), comprising:

    > at least one power electronics module (10);
    > an analysis device (12) according to claim 13.

15. A use of acoustic emissions for discriminating, whether a power electronics module (10) is fatigued, the acoustic emissions being generated during and/or after a current pulse (38) through the power electronics module (10) and being evaluated at different time points.

# Fig. 1

# Fig. 2

# Fig. 3

U(t) → S12

e(t) →
E(t) →  S14

S10

S16

# Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/105176 A1 (HONEYWELL INT INC [US]; DWYER MICHAEL D [US]; HELLICKSON DEAN R [US];) 5 October 2006 (2006-10-05) | 1,13-15 | INV. G01N29/14 |
| Y | * abstract * <br> * page 1, paragraph 2 * <br> * page 4, paragraph 2 * <br> * page 5, paragraph 3 * <br> * page 7, last paragraph - page 8, paragraph 1 * <br> * figure 2 * | 2-8, 10-12 | |
| X | KARKKAINEN TOMMI J ET AL: "Sounds from semiconductors - Acoustic emission experiment with a power module", 2014 16TH EUROPEAN CONFERENCE ON POWER ELECTRONICS AND APPLICATIONS, IEEE, 26 August 2014 (2014-08-26), pages 1-6, XP032651102, DOI: 10.1109/EPE.2014.6910840 [retrieved on 2014-09-25] | 1,13-15 | |
| Y | * abstract * <br> * paragraph "Experimental setup" * <br> * page 6, last paragraph * <br> * figures 1, 2, 4 * | 2-12 | TECHNICAL FIELDS SEARCHED (IPC) <br> G01N <br> G01R |

-/--

The present search report has been drawn up for all claims

| Place of search | Date of completion of the search | Examiner |
|---|---|---|
| Munich | 21 June 2016 | Rouault, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 16 15 1091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KARKKAINEN TOMMI J ET AL: "Acoustic Emission in Power Semiconductor Modules-First Observat", IEEE TRANSACTIONS ON POWER ELECTRONICS, INSTITUTE OF ELECTRICAL AND ELECTRONICS ENGINEERS, USA, vol. 29, no. 11, 1 November 2014 (2014-11-01), pages 6081-6086, XP011553063, ISSN: 0885-8993, DOI: 10.1109/TPEL.2013.2295460 [retrieved on 2014-07-08] | 1,13-15 | |
| Y | * abstract * * page 6081, right-hand column, paragraph 6 * * page 6082, left-hand column * * page 6085, last paragraph * ----- | 2-12 | |
| Y | CN 102 854 252 A (BEIJING INST TECHNOLOGY) 2 January 2013 (2013-01-02) * paragraph [0004] * * paragraph [0032] * ----- | 2-12 | TECHNICAL FIELDS SEARCHED (IPC) |

The present search report has been drawn up for all claims

| Place of search | Date of completion of the search | Examiner |
|---|---|---|
| Munich | 21 June 2016 | Rouault, Patrick |

EPO FORM 1503 03.82 (P04C01)

## ANNEX TO THE EUROPEAN SEARCH REPORT
## ON EUROPEAN PATENT APPLICATION NO.

EP 16 15 1091

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2016

| Patent document cited in search report | Publication date | Patent family member(s) | Publication date |
|---|---|---|---|
| WO 2006105176    A1 | 05-10-2006 | EP     1864124  A1<br>JP     5207963  B2<br>JP  2008537779  A<br>US  2006229837  A1<br>WO  2006105176  A1 | 12-12-2007<br>12-06-2013<br>25-09-2008<br>12-10-2006<br>05-10-2006 |
| CN 102854252     A | 02-01-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080071814 A